# EUROPEAN PATENT APPLICATION

(11) **EP 4 679 258 A1**
(43) Date of publication of application: **14.01.2026**
(21) Application number: 23928468.0
(22) Date of filing: 27.12.2023
(51) Int. Cl.: G06F 8/41

(54) **CODE PROCESSING METHOD AND APPARATUS**

(30) Priority: 23.03.2023 CN 202310304243
(71) Applicant: Huawei Technologies Co., Ltd., Shenzhen, Guangdong 518129 (CN)
(72) Inventor: CHEN, Geng, Shenzhen, Guangdong 518129 (CN); FU, Ming, Shenzhen, Guangdong 518129 (CN); LEI, Jitang, Shenzhen, Guangdong 518129 (CN)
(74) Representative: Gill Jennings & Every LLP
(86) International application number: PCT/CN2023/142342
(87) International publication number: WO 2024/193164

(57) **Abstract**

This application provides a code processing method and apparatus. The method includes: After obtaining first code corresponding to a source hardware architecture, a code processing apparatus performs concurrency synchronization variable recognition on the first code to obtain at least one concurrency synchronization variable; and then queries, from the first code, concurrency synchronization memory access code corresponding to each of the at least one concurrency synchronization variable, and may convert the concurrency synchronization memory access code corresponding to each of the at least one concurrency synchronization variable into corresponding SC-atomic memory access code. The SC-atomic memory access code corresponding to each of the at least one concurrency synchronization variable is used to generate target code applicable to a target hardware architecture. In this way, because the SC-atomic conversion operation performed in this method has an order-preserving characteristic, consistency between an execution order and a writing order of concurrency synchronization-related code can be ensured, to ensure sequential consistency and ensure functional correctness of the code.

## Description

### CROSS-REFERENCE TO RELATED APPLICATIONS

This application claims priority to Chinese Patent Application No. 202310304243.3, filed with the China National Intellectual Property Administration on March 23, 2023 and entitled "CODE PROCESSING METHOD AND APPARATUS", which is incorporated herein by reference in its entirety.

### TECHNICAL FIELD

This application relates to the field of computer technologies, and in particular, to a code processing method and apparatus.

### BACKGROUND

In some memory ordering hardware architectures (for example, an advanced reduced instruction set computing machine (Advanced RISC Machine, ARM) architecture, a performance optimization with enhanced reduced instruction set computing (Performance Optimization With Enhanced RISC, POWER) architecture, a reduced instruction set computing-fifth generation (Reduced Instruction Set computing Five, RISC-V) architecture, or an x86 architecture), when a processor executes code, to ensure maximum utilization of a pipeline, the processor needs to rearrange a memory access order based on an actual code execution status. This leads to inconsistency between an actual code execution order and a code writing order, causing some potential risks (for example, a crash during code execution).

In a present stage, a solution for the foregoing problem is as follows: A compiler performs static analysis on code execution in a memory ordering hardware architecture, to construct an abstract execution graph of the code. Then the compiler performs static analysis on the abstract execution graph to recognize each loop in the abstract execution graph, and inserts a barrier (fence) instruction into each loop, to enable the code to be executed based on sequential consistency (sequential consistency, SC). However, in this solution, during recognition of each loop in the abstract execution graph, the loop may be incorrectly recognized. Consequently, an extra fence instruction is inserted into the code. This causes an additional processor operation, for example, bus locking or buffer clearing, during code execution, leading to a code execution error.

### SUMMARY

Embodiments of this application provide a code processing method and apparatus, to ensure consistency between an execution order and a writing order of concurrency synchronization-related code, and ensure functional correctness of the code.

According to a first aspect, an embodiment of this application provides a code processing method. The method may be performed by a code processing apparatus or a component (for example, a chip system or a circuit) that can support a code processing apparatus in implementing a function needed for the method, or may be performed by a compiler that has a corresponding function of a code processing apparatus or that is equipped with a code processing apparatus. Optionally, for example, the code processing method is performed by a code processing apparatus. In the method, after the code processing apparatus obtains first code corresponding to a source hardware architecture, the code processing apparatus may perform concurrency synchronization variable recognition on the first code to obtain at least one concurrency synchronization variable. Then the code processing apparatus queries, from the first code, concurrency synchronization memory access code corresponding to each of the at least one concurrency synchronization variable, and may convert the concurrency synchronization memory access code corresponding to each of the at least one concurrency synchronization variable into corresponding SC-atomic memory access code. The concurrency synchronization variable is a global variable for transferring a message between a plurality of threads or a variable simultaneously accessible to a plurality of threads. The SC-atomic memory access code corresponding to each of the at least one concurrency synchronization variable is used to generate target code applicable to a target hardware architecture.

In the foregoing design, after recognizing the at least one concurrency synchronization variable included in the first code, the code processing apparatus may convert the concurrency synchronization memory access code corresponding to each of the at least one concurrency synchronization variable into the corresponding SC-atomic memory access code. In this way, because the SC-atomic conversion operation performed in this design has an order-preserving characteristic, consistency between an execution order and a writing order of concurrency synchronization-related code (namely, concurrency control-related code) can be ensured in this design, to ensure sequential consistency and ensure functional correctness of the code.

In a possible design, the code processing apparatus may perform concurrency synchronization variable recognition on the first code in the following manners, to obtain the at least one concurrency synchronization variable.

Manner 1: When a first variable included in the first code is annotated with a keyword volatile or a keyword atomic, the code processing apparatus may determine that the first variable is an explicit concurrency synchronization variable.

Manner 2: When a loop exit condition of a first loop statement includes a second variable with a non-local dependency attribute and the second variable does not affect the loop exit condition of the first loop statement, the code processing apparatus may determine that the second variable is an implicit concurrency synchronization variable.

In the foregoing design, the code processing apparatus performs concurrency synchronization variable recognition on the first code, to perform targeted conversion on memory access code included in the first code, and achieve sequential consistency of code execution. In addition, in this design, because not all of memory access code included in the first code needs to be converted, resources and time needed for code conversion can be reduced, to improve code processing efficiency.

In a possible design, after the code processing apparatus performs concurrency synchronization variable recognition on the first code to obtain the at least one concurrency synchronization variable, the code processing apparatus may further ensure execution correctness of the code during execution (to be specific, ensure that the code can be executed in a correct order in the target hardware architecture) in the following two possible implementations.

In a possible implementation, when the first loop statement in the first code includes a third variable with a non-local dependency attribute other than the second variable and a related value of the third variable is used outside a loop body of the first loop statement, the code processing apparatus may insert a memory barrier instruction into first SC-atomic memory access code corresponding to the second variable (the second variable is a special implicit concurrency synchronization variable).

In another possible implementation, the code processing apparatus may query, from the first code, memory access code that has a same-name relationship or an alias relationship with the third variable. Then the code processing apparatus may convert the memory access code that has a same-name relationship or an alias relationship with the third variable into second SC-atomic memory access code.

In a possible design, that the code processing apparatus inserts the memory barrier instruction into the first SC-atomic memory access code corresponding to the second variable includes:

The code processing apparatus may insert the memory barrier instruction before a read operation instruction, included in the first SC-atomic memory access code, of the second variable; and/or the code processing apparatus may insert the memory barrier instruction after a write operation instruction, included in the first SC-atomic memory access code, of the second variable.

In the foregoing design, when the first loop statement in the first code includes the third variable with the non-local dependency attribute other than the second variable and the related value of the third variable is used outside the loop body of the first loop statement, the memory barrier instruction is inserted before the read operation instruction of the second variable, and/or the memory barrier instruction is inserted after the write operation instruction of the second variable, to effectively ensure that code obtained through conversion can be executed in a correct order in the target hardware architecture.

In a possible design, that the code processing apparatus queries, from the first code, the concurrency synchronization memory access code corresponding to each of the at least one concurrency synchronization variable, and converts the concurrency synchronization memory access code corresponding to each of the at least one concurrency synchronization variable into the corresponding SC-atomic memory access code includes:

When the at least one concurrency synchronization variable includes the explicit concurrency synchronization variable, the code processing apparatus may query, from the first code by using a pointer alias analysis method, first concurrency synchronization memory access code that has an alias relationship with the explicit concurrency synchronization variable, and may convert the first concurrency synchronization memory access code into third SC-atomic memory access code; or
when the at least one concurrency synchronization variable includes the implicit concurrency synchronization variable, the code processing apparatus may query, from the first code by using a pointer alias analysis method, second concurrency synchronization memory access code that has an alias relationship with the implicit concurrency synchronization variable, and may convert the second concurrency synchronization memory access code into fourth SC-atomic memory access code.

In the foregoing design, the proxy processing apparatus can accurately find, in a timely manner by using the pointer alias analysis method, concurrency synchronization memory access code that has an alias relationship with a concurrency synchronization variable, and can ensure consistency between an execution order and a writing order of the concurrency synchronization memory access code after converting the concurrency synchronization memory access code into corresponding SC-atomic memory access code, to help ensure that the code is executed in a correct order in the target hardware architecture.

In a possible design, the first code is one of the following content: C/C++ source code, assembly code, or intermediate representation, where the intermediate representation is obtained by compiling the C/C++ source code.

In the foregoing design, in the code processing solution provided in this embodiment of this application, code in different forms can be processed, to meet requirements of different users.

According to a second aspect, an embodiment of this application provides a possible code processing apparatus. For beneficial effect, refer to the descriptions of the first aspect. Details are not described herein again. The code processing apparatus has a function of implementing the behavior in the method example in the first aspect. The function may be implemented by hardware, or may be implemented by hardware executing corresponding software. The hardware or the software includes one or more modules corresponding to the function. In a possible design, the code processing apparatus includes a communication module and a processing module. The communication module is configured to obtain first code corresponding to a source hardware architecture. The processing module is configured to perform concurrency synchronization variable recognition on the first code to obtain at least one concurrency synchronization variable. The concurrency synchronization variable indicates a global variable for transferring a message between a plurality of threads or a variable simultaneously accessible to a plurality of threads. The processing module is further configured to query, from the first code, concurrency synchronization memory access code corresponding to each of the at least one concurrency synchronization variable. The processing module is further configured to convert the concurrency synchronization memory access code corresponding to each of the at least one concurrency synchronization variable into corresponding SC-atomic memory access code. The SC-atomic memory access code corresponding to each of the at least one concurrency synchronization variable is used to generate target code applicable to a target hardware architecture. The modules may perform corresponding functions in any one of the possible designs of the first aspect. For details, refer to the detailed descriptions in the method example. Details are not described herein again.

According to a third aspect, an embodiment of this application provides a possible code processing apparatus. The code processing apparatus includes a communication interface and a processor. Optionally, the code processing apparatus further includes a memory. The memory is configured to store a computer program or instructions. The processor is coupled to the memory and the communication interface. When the processor executes the computer program or instructions, the code processing apparatus is enabled to perform the method in any one of the possible designs of the first aspect.

According to a fourth aspect, an embodiment of this application provides a computer program product. The computer program product includes a computer program or instructions. When the computer program or instructions are run on a computer, the computer is enabled to perform the method in any one of the possible designs of the first aspect.

According to a fifth aspect, an embodiment of this application provides a computer-readable storage medium. The computer-readable storage medium stores a computer program or instructions. When the computer program or instructions are executed by a computer, the computer is enabled to perform the method in any one of the possible designs of the first aspect.

According to a sixth aspect, an embodiment of this application further provides a chip. The chip is coupled to a memory, and the chip is configured to read a computer program stored in the memory, to perform the method in any one of the possible designs of the first aspect.

According to a seventh aspect, an embodiment of this application further provides a chip system. The chip system includes a processor, configured to support a computer apparatus in implementing the method in any one of the possible designs of the first aspect. In a possible design, the chip system further includes a memory, and the memory is configured to store a program and data that are necessary for the computer apparatus. The chip system may include a chip, or may include a chip and another discrete component.

In this application, based on the implementations provided in the foregoing aspects, the implementations may be further combined to provide more implementations.

### BRIEF DESCRIPTION OF DRAWINGS

FIG. 1 is an example diagram of a possible system architecture according to an embodiment of this application;
FIG. 2 is an example diagram of a structure of functional modules of a compiler according to an embodiment of this application;
FIG. 3 is an example schematic flowchart of a code processing method according to an embodiment of this application;
FIG. 4a is an example diagram of a program running in an ARM architecture according to an embodiment of this application;
FIG. 4b is an example diagram of a program into which a memory barrier instruction is inserted according to an embodiment of this application;
FIG. 5a is an example diagram of source code execution in a source hardware architecture according to an embodiment of this application;
FIG. 5b is an example diagram of intermediate representation according to an embodiment of this application;
FIG. 5c is an example diagram of SC-atomic memory access code corresponding to intermediate representation according to an embodiment of this application;
FIG. 5d is an example diagram of SC-atomic memory access code applicable to a target hardware architecture according to an embodiment of this application;
FIG. 6 is an example diagram of a structure of a possible code processing apparatus according to an embodiment of this application; and
FIG. 7 is an example diagram of a structure of a possible code processing apparatus according to an embodiment of this application.

### DESCRIPTION OF EMBODIMENTS

Before technical solutions provided in this application are described, some terms in this application are described to facilitate understanding by a person skilled in the art.
(1) Sequential consistency: In a multi-core processor, all processors sense all operations in a same order, and an operation order sensed by all processors may be referred to as a global order. In the global order, an operation order of each processor is the same as a programming order of the processor.
(2) Memory barrier (memory barrier/fence): a type of synchronization barrier instruction, also referred to as a memory fence, a barrier instruction, or the like. The memory barrier enables a CPU or a compiler to perform operations on a memory strictly in a specific order. To be specific, an instruction before the memory barrier and an instruction after the memory barrier are not to be out of order due to system optimization or other causes.
(3) Synchronization: a means of communication between a plurality of threads (processes). There are usually the following scenarios: Producer (writer)-consumer (reader): One thread writes data to a memory, and another thread reads the data from a same address. Mutually exclusive resource access: If a plurality of threads need to simultaneously access one resource (which may be understood as a variable) but the resource is accessible only to one thread at one moment, a hardware-based atomic operation or another means needs to be used to ensure the access.
(4) Concurrency control: a means for ensuring correctness of concurrent operations in the fields of operating systems and databases. Usually, a lock, an atomic operation, and other means are used.
(5) Lock: a software synchronization mechanism that needs support from a hardware-based atomic instruction (atomic operation) and that ensures that a resource is accessible only to one thread at one moment.
(6) Atomic operation: an operation that is not to be interrupted by thread switching, interruption, or the like. For example, in an atomic operation called fetch_and_add (FAA), data is first read from a memory, then an add operation is performed on the data, and then processed data is written to the memory. In this process, no other thread can access the data (the memory unit), and the operation cannot be interrupted either.
(7) Control flow graph (Control Flow Graph, CFG): an abstraction of a program. Each vertex in the control flow graph corresponds to a basic block of the program. The basic block is a segment of code without a branch instruction or a branch destination. The basic block starts with a branch destination, and the basic block ends with a branch. In a control process, a branch is represented by a directed edge. In most cases, there are two specially specified basic blocks. One is an entry block (entry block), which is the 1^{st} basic block of the program that is encountered upon entry into the control flow graph. The other is an exit block (exit block), which indicates an end of all processes.
(8) Concurrency kit: an encapsulation of concurrency control code.

The following describes embodiments of this application in detail with reference to the accompanying drawings.

The following describes a possible code processing system architecture to which a code processing method provided in this application is applicable. It should be noted that the descriptions are intended for ease of understanding by a person skilled in the art, but not to limit the protection scope claimed in this application.

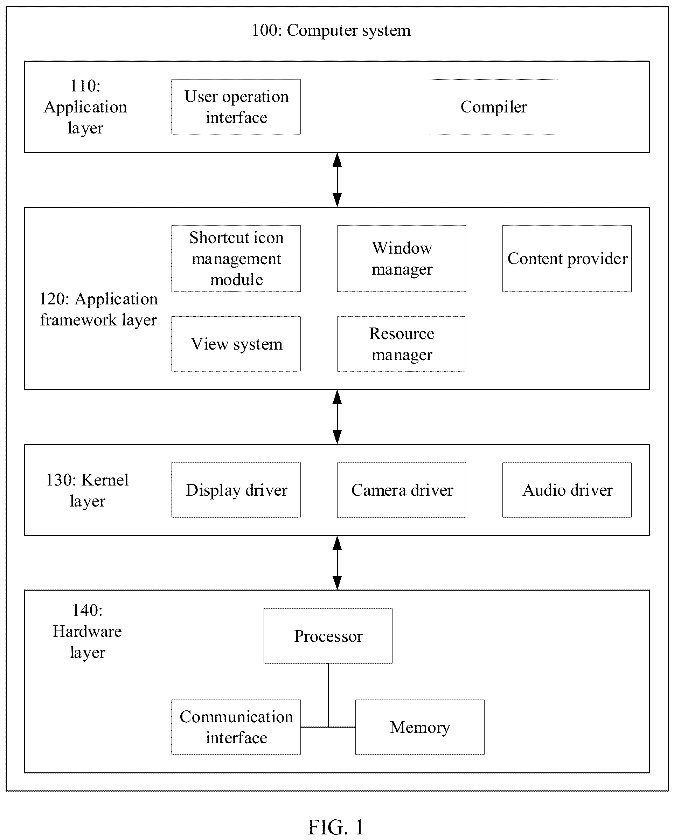

FIG. 1 is an example diagram of a possible system architecture to which this application is applicable. As shown in FIG. 1, for example, the system architecture is a computer system architecture. The computer system architecture may be a hierarchical architecture. For example, through division based on logical functions, a computer system 100 may be divided into the following layers: an application layer 110, an application framework layer 120, a kernel layer 130, and a hardware layer 140. Optionally, the layers may communicate with each other through a software interface. The following separately describes functions of the layers.

The application layer 110 may include a series of application packages. As shown in FIG. 1, the application layer may include a user operation interface, a compiler, and the like. A code operator may perform a corresponding operation on the user operation interface to start a processing process of to-be-executed code (for example, source code). Optionally, the application layer may also include an application, for example, music, a video, or a voice assistant. Optionally, the compiler may be configured to compile the source code. For example, the compiler may be configured to translate "one language" into " another language". For example, the compiler may translate program source code (for example, C/C++ source code) developed by a developer according to a requirement into machine language code (for example, binary code) that can be recognized and executed by a machine. Optionally, the compiler may include a code recognition and conversion module. This is equivalent to that a code recognition and conversion plug-in is installed in the compiler. The code recognition and conversion plug-in is configured to analyze and recognize intermediate representation (or the source code, assembly code, or the like) to obtain the intermediate representation (or the source code, the assembly code, or the like), perform concurrency synchronization variable recognition, and convert, into corresponding SC-atomic memory access code, concurrency synchronization memory access code corresponding to a concurrency synchronization variable included in the intermediate representation (or the source code, the assembly code, or the like).

The application framework layer 120 may provide an application programming interface and a programming framework for an application included in the application layer 110. Optionally, the application framework layer 120 may include some predefined functions. As shown in FIG. 1, the application framework layer may include a shortcut icon management module, a window manager, a content provider, a view system, a resource manager, or the like.

The shortcut icon management module is configured to manage a shortcut icon displayed on a terminal device, for example, create the shortcut icon, remove the shortcut icon, or monitor whether the shortcut icon meets a display condition.

The window manager is configured to manage a window program. The window manager may obtain a size of a display, determine whether there is a status bar, perform screen locking, take a screenshot, or the like.

The content provider is configured to store and obtain data, and enable the data to be accessed by an application. The data may include a video, an image, audio, a browsing history, a bookmark, and the like.

The view system may include a visual control, for example, a control for displaying text or a control for displaying a picture. The view system may be configured to construct an application. A display interface may include one or more views.

The resource manager may provide various resources such as an icon, a picture, a layout file, or a video file for an application.

The kernel layer 130 is a layer between hardware and software, and may provide a core system service of an operating system. For example, the kernel layer may include a display driver, a camera driver, or an audio driver.

The hardware layer 140 may include a communication interface, a processor, a memory, and the like. The communication interface, the processor, and the memory may be connected through a bus. For example, the processor may include one or more processing units. For example, the processor may include an application processor (application processor, AP), a baseband processor, a graphics processing unit (graphics processing unit, GPU), an image signal processor (image signal processor, ISP), a controller, a memory, a video codec, a digital signal processor (digital signal processor, DSP), and/or a neural-network processing unit (neural-network processing unit, NPU). Different processing units may be independent components, or may be integrated into one or more processors. The controller may be a nerve center and a command center of the terminal device. The controller may generate an operation control signal based on an instruction operation code and a timing signal, to control instruction fetching and instruction execution. In some embodiments, a memory may be further disposed in the processor to store instructions and data. For example, the memory in the processor may be a cache. The memory may store instructions or data that have/has been used or are/is cyclically used by the processor. If the processor needs to use the instructions or the data again, the processor may directly invoke the instructions or the data from the memory, to avoid repeated access, reduce waiting time of the processor, and improve system efficiency. For example, when the computer system runs, the processor may run the compiler to perform the code processing method provided in embodiments of this application.

It should be noted that FIG. 1 provides a possible system architecture only as an example, and the example system architecture is intended to describe the technical solutions in embodiments of this application more clearly, and does not constitute a limitation on a system architecture of the code processing method provided in this application. In addition, forms and quantities of the units in the system architecture shown in FIG. 1 are merely examples, and do not constitute a limitation on this application. In addition, names of the units in the system architecture shown in FIG. 1 are merely examples. During specific implementation, names of the units may alternatively be other names. This is not specifically limited in this application.

To more clearly describe a code processing solution provided in embodiments of this application, the following first briefly describes related technical solutions.

In a present stage, in many C/C++ projects, a volatile + fence programming mode is widely used to implement concurrency control. To be specific, a shared variable related to concurrency control is declared as volatile, and a fence instruction is inserted into code. For example, code in a data plane development kit (Data Plane Development Kit, DPDK), which is an open-source project, is used as an example. Example DPDK code is as follows:

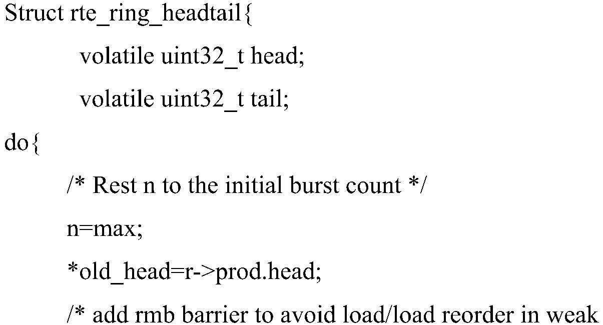

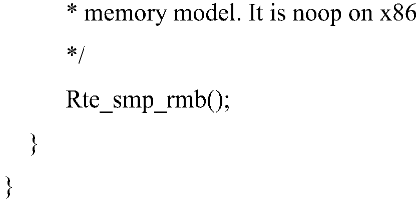

In C/C++, the keyword volatile indicates to prevent compiler optimization. During compiler optimization, an order of volatile memory access does not change, but an order of other memory access may change. The fence instruction is used to prevent memory access before and after the fence instruction from being executed out of order across fences during execution by a processor. Therefore, in the volatile + fence programming mode, order preserving for the compiler is implemented by using volatile, and order preserving for the processor is implemented by using a fence. However, insertion positions and instruction forms of fence instructions in hardware architectures are different. Therefore, if too few fence instructions are inserted or a fence instruction is inserted at an incorrect position, an instruction execution order does not meet an expectation, causing a correctness issue (for example, a correctness issue may occur when code is correctly executed in one hardware architecture is migrated to another hardware architecture). In addition, if too many fence instructions are inserted, an additional processor operation, for example, bus locking or buffer clearing, may occur during code execution, causing a code execution error (for example, an error occurs when code is correctly executed in one hardware architecture is migrated to another hardware architecture for execution).

In view of the foregoing problems, this application provides a code processing method, to ensure consistency between an execution order and a writing order of concurrency synchronization-related code (namely, concurrency control-related code), ensure sequential consistency, and ensure functional correctness of the code.

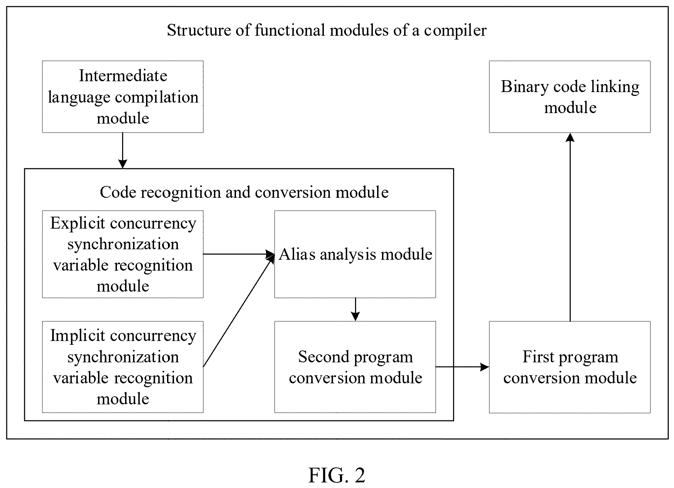

Based on the system architecture shown in FIG. 1, this application further provides a structure of functional modules of a compiler. Refer to FIG. 2. Through division based on logical functions, the compiler may be divided into the following functional modules: an intermediate language compilation module, a code recognition and conversion module, a first program conversion module, a binary code linking module, and the like. Optionally, the code recognition and conversion module (namely, a code processing apparatus) may include but is not limited to at least one of the following: an explicit concurrency synchronization variable recognition module, an implicit concurrency synchronization variable recognition module, an alias analysis module, or a second program conversion module.

It should be noted that a connection relationship between the functional modules shown in FIG. 2 is merely an example, and does not constitute a limitation on this application. The following separately describes functions of the functional modules.

The intermediate language compilation module is configured to compile source code into intermediate representation. For example, a hardware architecture (for example, a weak memory ordering hardware architecture) is used as an example. The intermediate language compilation module may compile source code (for example, C/C++ source code) in the weak memory ordering hardware architecture into intermediate representation. The intermediate representation may serve as input for the code recognition and conversion module.

For function descriptions of the code recognition and conversion module, refer to the descriptions about the code recognition and conversion plug-in in the application layer 110 shown in FIG. 1. Details are not described herein again. Optionally, the code recognition and conversion module may also be configured to insert a memory barrier instruction into SC-atomic memory access code corresponding to a specific type of concurrency synchronization variable (for example, a special implicit concurrency synchronization variable).

The explicit concurrency synchronization variable recognition module is configured to recognize the intermediate representation (or the source code, assembly code, or the like) to obtain an explicit concurrency synchronization variable included in the intermediate representation (or the source code, the assembly code, or the like).

The implicit concurrency synchronization variable recognition module is configured to recognize the intermediate representation (or the source code, the assembly code, or the like) to obtain an implicit concurrency synchronization variable included in the intermediate representation (or the source code, the assembly code, or the like).

The alias analysis module is configured to perform analysis to determine concurrency synchronization memory access code that is in the intermediate representation (or the source code, the assembly code, or the like) and that has an alias relationship with the explicit concurrency synchronization variable, or determine concurrency synchronization memory access code that is in the intermediate representation (or the source code, the assembly code, or the like) and that has an alias relationship with the implicit concurrency synchronization variable.

The second program conversion module is configured to convert the concurrency synchronization memory access code that is in the intermediate representation (or the source code, the assembly code, or the like) and that has the alias relationship with the explicit concurrency synchronization variable into corresponding SC-atomic memory access code, or convert the concurrency synchronization memory access code that is in the intermediate representation (or the source code, the assembly code, or the like) and that has the alias relationship with the implicit concurrency synchronization variable into corresponding SC-atomic memory access code. Optionally, after converting concurrency synchronization memory access code that is in the intermediate representation (or the source code, the assembly code, or the like) and that has an alias relationship with a specific type of concurrency synchronization variable (for example, a special implicit concurrency synchronization variable) into corresponding SC-atomic memory access code, the second program conversion module may also be configured to insert a memory barrier instruction into the SC-atomic memory access code corresponding to the special implicit concurrency synchronization variable.

The first program conversion module is configured to convert the SC-atomic memory access code included in the intermediate representation (or the source code, the assembly code, or the like) into SC-atomic memory access code applicable to a target hardware architecture, and may convert the SC-atomic memory access code applicable to the target hardware architecture into corresponding binary code, or may be configured to convert code, included in the intermediate representation (or the source code, the assembly code, or the like), other than the SC-atomic memory access code into corresponding binary code.

The binary code linking module is configured to convert the binary code corresponding to the SC-atomic memory access code included in the intermediate representation (or the source code, the assembly code, or the like) and the code other than the SC-atomic memory access code into corresponding binary code, and perform linking to generate target binary code applicable to the target hardware architecture.

Based on the system architecture shown in FIG. 1, the following describes in detail a specific implementation of the code processing method in embodiments of this application.

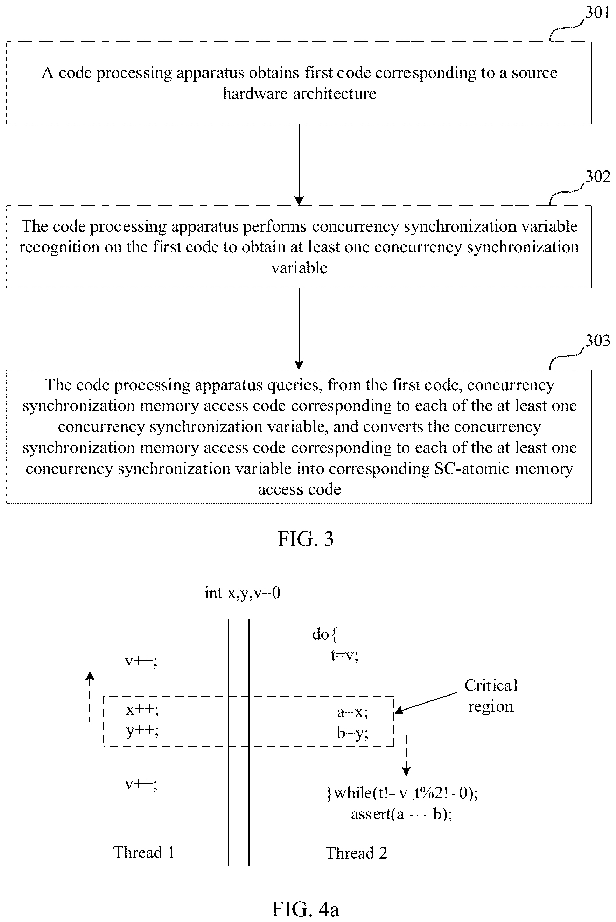

FIG. 3 is an example schematic flowchart of a code processing method according to an embodiment of this application. The method is applicable to the system architecture shown in FIG. 1. The method process may be performed by a code processing apparatus or a component (for example, a chip system or a circuit) that can support a code processing apparatus in implementing a function needed for the method. Optionally, the code processing apparatus may be the code recognition and conversion module included in the compiler in the application layer 110 shown in FIG. 1; or may be the compiler in the application layer 110 shown in FIG. 1, where the compiler is equipped with a code recognition and conversion module or has a corresponding function of a code recognition and conversion module; or may be a terminal device (for example, a desktop computer or a notebook computer) that is equipped with a computer system 100 or has a corresponding function of a code recognition and conversion module. For ease of description of the technical solutions provided in embodiments of this application, an example in which the code processing method is performed by a code processing apparatus is used below for description. As shown in FIG. 3, the method may include the following steps.

Step 301: The code processing apparatus obtains first code corresponding to a source hardware architecture.

For example, the first code may be one of the following content: C/C++ source code, assembly code, or intermediate representation. Optionally, the intermediate representation may be obtained by a compiler by compiling C/C++ source code; and the assembly code may be obtained by compiling, by a compiler integrating an assembly function, source code (for example, C/C++ source code) obtained through processing by a preprocessor, or may be obtained by a disassembly tool by processing existing binary code.

Optionally, the source hardware architecture and a target hardware architecture may be a same hardware architecture or different hardware architectures. For example, the hardware architecture may include but is not limited to a strong memory ordering architecture, a weak memory ordering architecture, or a hardware architecture in another form. For example, when the source hardware architecture is a strong memory ordering architecture, the target hardware architecture may be the strong memory ordering architecture, or the target hardware architecture may be another strong memory ordering architecture, or the target hardware architecture may be a weak memory ordering architecture. For another example, when the source hardware architecture is a weak memory ordering architecture, the target hardware architecture may be the weak memory ordering architecture, or the target hardware architecture may be another weak memory ordering architecture, or the target hardware architecture may be a strong memory ordering architecture. This is not limited in this embodiment of this application.

Optionally, in an example, the first code is the intermediate representation. The compiler compiles the C/C++ source code through an intermediate language compilation module to obtain the intermediate representation. Then the compiler inputs the intermediate representation to the code processing apparatus. Optionally, the code processing apparatus may alternatively request to obtain the intermediate representation from the intermediate language compilation module.

Step 302: The code processing apparatus performs concurrency synchronization variable recognition on the first code to obtain at least one concurrency synchronization variable.

Optionally, the concurrency synchronization variable may indicate a global variable for transferring a message between a plurality of threads or a variable simultaneously accessible to a plurality of threads.

For example, the at least one concurrency synchronization variable may include at least one of the following: an explicit concurrency synchronization variable, an implicit concurrency synchronization variable, or the like. Optionally, the implicit concurrency synchronization variable may be further classified into two types: a first implicit concurrency synchronization variable and a second implicit concurrency synchronization variable.

Based on the foregoing content, an implementation process of performing, by the code processing apparatus, concurrency synchronization variable recognition on the first code is described in the following cases.

Case 1: When recognizing that a first variable included in the first code is annotated with a keyword volatile or a keyword atomic, the code processing apparatus may determine that the first variable is an explicit concurrency synchronization variable.

Optionally, the first variable may be any one of a plurality of variables included in the first code.

For example, volatile is a keyword in C/C++ code. A function of the keyword is to prevent compiler optimization. When a processor executes code, an order of volatile memory access does not change, but an order of other memory access may change. Consequently, a code execution order cannot be consistent with a code writing order. atomic is a keyword atomic in a C/C++ version (C11/C++11). The keyword atomic may be added to a variable declaration to implement atomic encapsulation of an integer int data structure, a character char data structure, a Boolean bool data structure, or the like. A variable declared to be atomic can be accessed only through an atomic operation. For a specific type of code (for example, C/C++ source code, assembly code, or intermediate representation), when recognizing that the code includes a variable annotated with a keyword volatile or a keyword atomic, the code processing apparatus may determine that the variable is an explicit concurrency synchronization variable.

For example, the foregoing DPDK code is used as an example. When recognizing that the DPDK code includes a variable head and a variable tail that are annotated with a keyword volatile, the code processing apparatus may determine that both the variable head and the variable tail are explicit concurrency synchronization variables.

Optionally, during actual code writing, a programmer may forget to add a keyword volatile or a keyword atomic to a declaration in most cases. Therefore, only a variable annotated with a keyword volatile or a keyword atomic is recognized, and execution correctness of code cannot be ensured during execution. Therefore, an implicit concurrency synchronization variable included in the code further needs to be recognized. An implementation process of recognizing, by the code processing apparatus, an implicit concurrency synchronization variable is described in the following case 2 and case 3.

Case 2: When recognizing that a loop exit condition of a first loop statement includes a second variable with a non-local dependency attribute and the second variable does not affect the loop exit condition of the first loop statement, the code processing apparatus may determine that the second variable is the first implicit concurrency synchronization variable.

Optionally, the first loop statement is one of one or more loop statements included in the first code.

Optionally, when the code processing apparatus cannot trace, by using an instruction influence analysis (Instruction influence analysis) method, a source of a variable value of the second variable in a function (for example, a global function or a local function) included in the first code, the code processing apparatus may determine that the second variable has a non-local dependency attribute.

For example, a specific loop statement included in the first code is used as an example. The code processing apparatus may perform, by using the instruction influence analysis method, data stream analysis on a variable in a loop exit condition included in the loop statement, that is, traverse an instruction to trace a value source of the variable. This is equivalent to tracing, in a function (for example, a global function or a local function) included in the first code, the value source of the variable in the loop exit condition, and checking whether a corresponding store operation has a non-local dependency (to be specific, checking a specific storage position of the value source of the variable), to determine whether the variable included in the loop exit condition has a non-local dependency attribute.

For example, the following program is used as an example to describe an implementation process of recognizing the first implicit concurrency synchronization variable by the code processing apparatus. For example, the program is as follows:

```
                                       int data=ctrl=0;
                         thread1:data=1; ctrl=1;
                         thread2:while(!ctrl){} assert(data==1);
```

In the foregoing program, a thread 1 (thread1) first writes a variable data and then writes a shared variable ctrl. A thread 2 (thread2) first tests a value of ctrl by using a while loop. If ctrl is updated, the thread 2 exits the loop and tests a value of data through assertion. An exit condition of the while loop is ctrl!=0. The exit condition of the while loop includes access to the variable ctrl. Therefore, the variable ctrl may be referred to as having a non-local dependency. In addition, in a body of the while loop, the variable ctrl does not affect a value of a related variable of the loop exit condition. Therefore, the code processing apparatus may refer to the while loop as a spin loop, and may refer to the variable ctrl as the first implicit concurrency synchronization variable (in other words, the variable ctrl may be referred to as a spin control).

For example, a memory ordering hardware architecture is ARM. During running of the foregoing program on the ARM, because data and ctrl have no data dependency (there is no value assignment relationship), a value assignment of data and a value assignment of ctrl in the thread 1 may be reordered (reorder). Therefore, when the thread 2 exits the loop, data may be 0, leading to a failure of the assertion. However, according to the code processing solution provided in this embodiment of this application, after recognizing the first implicit concurrency synchronization variable, the code processing apparatus converts concurrency synchronization memory access code related to the first implicit concurrency synchronization variable (for example, the variable ctrl) into SC-atomic memory access code. The SC-atomic conversion operation performed in the foregoing processing manner has an order-preserving characteristic, and data=1 and ctrl=1 are not reordered in the thread 1. Therefore, when the thread 2 exits the while loop, it can be ensured that a value of data has been updated in the thread 1, and the assertion is satisfied.

Based on the foregoing content, it can be concluded that a loop may be referred to as a spin loop when an exit condition of the loop depends on another thread, to be specific, the exit condition of the loop includes access to a global variable, a value of the global variable is not modified in a loop body, and an exit from the loop may be performed only after the value of the global variable is modified by the another thread.

For example, a program may be abstracted into a CFG, and the CFG includes a basic block and a directed edge. The CFG includes the following concepts:

Loop (loop): a strongly connected subgraph (all nodes are accessible to each other) of the CFG. External edges of the subgraph point to a same node (loop header) in the subgraph. In other words, the loop header controls other nodes of the loop (to be specific, all paths reaching the other nodes of the loop pass through the loop header). The loop is a largest subset that meets the foregoing two conditions. It is specified that all nodes controlled by the loop header can reach the loop header. Therefore, each path of the loop finally has a back edge pointing to the loop header.

Loop exit condition (loop exit condition): a set of conditions in a conditional jump instruction for enabling all nodes in a loop to point to the outside of the loop from the inside of the loop.

Non-local dependency (non-local dependency): indicates that memory access in a function is non-local (non-local). A destination address of the memory access can also be accessed outside the function. For example, a global variable is accessed, a parameter that is input through a reference is accessed, or a variable outside the function is accessed through a pointer. In a CFG, if a node has non-local memory access, the node may be referred to as having a non-local dependency.

Based on the foregoing content descriptions, when a loop meets the following two conditions, it can be determined that the loop is a spin loop. A condition 1 is as follows: Each condition included in a loop exit condition of the loop includes a non-local dependency. A condition 2 is as follows: Non-local dependency memory access in the loop does not change the loop exit condition.

For example, the following example shows some spin loops included in a program.

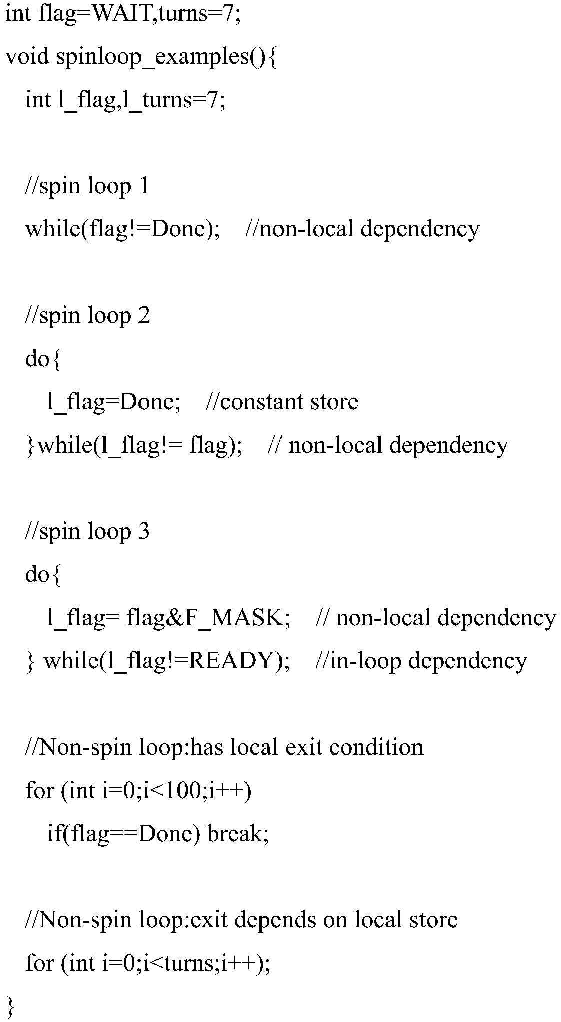

Case 3: When recognizing that a first loop statement includes a third variable with a non-local dependency attribute other than a second variable and a related value of the third variable is used outside a loop body of the first loop statement, the code processing apparatus may determine that the second variable is the second implicit concurrency synchronization variable (to be specific, a special first implicit concurrency synchronization variable).

Optionally, when the code processing apparatus cannot trace, by using an instruction influence analysis method, a source of a variable value of the third variable in a function (for example, a global function or a local function) included in the first code, the code processing apparatus may determine that the third variable has a non-local dependency attribute.

For example, a program, shown in FIG. 4a, that runs on an ARM architecture is used below as an example to describe an implementation process of recognizing the second implicit concurrency synchronization variable by the code processing apparatus.

FIG. 4a includes two threads. A thread 1 writes two variables: x and y. A thread 2 first reads values of x and y; then tests validity of the read values; and if t==v&&t%2==0, considers that both the read values of x and y are updated values, and then exits a loop. According to the descriptions of the determining condition for the spin loop in the foregoing case 2, it can be learned that a do-while loop in the thread 2 shown in FIG. 4a is a spin loop, and a variable v included in the do-while loop may be referred to as a spin control. In addition, the code processing apparatus analyzes the do-while loop in the thread 2. When the thread 2 reads a variable (a=x; a=y) other than the variable v in the do-while loop and uses a related value (namely, assert(a==b)) of the variable outside a loop body of the do-while loop, the code processing apparatus may refer to the do-while loop as an optimistic loop (the optimistic loop is a special spin loop), and may refer to the variable v as the second implicit concurrency synchronization variable (to be specific, a variable marked as an optimistic control).

Based on the foregoing content, it can be concluded that, when a spin loop has a non-local memory read on a non-spin control and a related read value is used outside a loop of the spin loop, the spin loop may be referred to as an optimistic loop, and a variable that is included in the optimistic loop and that is referred to as a spin control may be referred to as an optimistic control.

Step 303: The code processing apparatus queries, from the first code, concurrency synchronization memory access code corresponding to each of the at least one concurrency synchronization variable, and converts the concurrency synchronization memory access code corresponding to each of the at least one concurrency synchronization variable into corresponding SC-atomic memory access code.

Optionally, the SC-atomic memory access code corresponding to each of the at least one concurrency synchronization variable may be used to generate target code (for example, binary code) applicable to the target hardware architecture.

For example, the SC-atomic memory access code corresponding to each of the at least one concurrency synchronization variable included in the first code, and code, included in the first code, other than the SC-atomic memory access code corresponding to each of the at least one concurrency synchronization variable are jointly used to generate the target code applicable to the target hardware architecture.

For example, an implementation process of determining, by the code processing apparatus, the SC-atomic memory access code corresponding to each of the at least one concurrency synchronization variable is described in the following cases.

Case 1: When the at least one concurrency synchronization variable includes the explicit concurrency synchronization variable, the code processing apparatus may query, from the first code by using a pointer alias analysis (alias analysis) method (for example, a global pointer alias analysis method), first concurrency synchronization memory access code that has an alias relationship with the explicit concurrency synchronization variable. Then the code processing apparatus may convert the first concurrency synchronization memory access code into third SC-atomic memory access code.

Case 2: When the at least one concurrency synchronization variable includes the implicit concurrency synchronization variable, the code processing apparatus may query, from the first code by using a pointer alias analysis method, second concurrency synchronization memory access code that has an alias relationship with the implicit concurrency synchronization variable. Then the code processing apparatus may convert the second concurrency synchronization memory access code into fourth SC-atomic memory access code.

Optionally, when the implicit concurrency synchronization variable includes the first implicit concurrency synchronization variable, the code processing apparatus may query, from the first code by using a pointer alias analysis method, third concurrency synchronization memory access code that has an alias relationship with the first implicit concurrency synchronization variable. Then the code processing apparatus may convert the third concurrency synchronization memory access code into fifth SC-atomic memory access code.

Optionally, when the implicit concurrency synchronization variable includes the second implicit concurrency synchronization variable, the code processing apparatus may query, from the first code by using a pointer alias analysis method, fourth concurrency synchronization memory access code that has an alias relationship with the second implicit concurrency synchronization variable. Then the code processing apparatus may convert the fourth concurrency synchronization memory access code into sixth SC-atomic memory access code.

Optionally, after the code processing apparatus obtains the at least one concurrency synchronization variable or converts the concurrency synchronization memory access code corresponding to each of the at least one concurrency synchronization variable in the first code into the corresponding SC-atomic memory access code, the code processing apparatus may further ensure execution correctness of the code during execution (to be specific, ensure that the code can be executed in a correct order in the target hardware architecture) in the following implementations, but not limited thereto.

Manner 1: When a first loop statement in the first code includes a third variable with a non-local dependency attribute other than a second variable and a related value of the third variable is used outside a loop body of the first loop statement, the code processing apparatus may insert a memory barrier instruction into first SC-atomic memory access code corresponding to the second variable (the second variable is a special first implicit concurrency synchronization variable, in other words, the second variable is the second implicit concurrency synchronization variable).

Optionally, the code processing apparatus may insert the memory barrier instruction before a read operation instruction, included in the first SC-atomic memory access code, of the second implicit concurrency synchronization variable; and/or the code processing apparatus may insert the memory barrier instruction after a write operation instruction, included in the first SC-atomic memory access code, of the second implicit concurrency synchronization variable.

For example, the program, shown in FIG. 4a, that runs on a specific hardware architecture (for example, a weak memory ordering hardware architecture ARM) is used as an example. For the program, shown in FIG. 4a, that runs on the weak memory ordering hardware architecture, even if the code processing apparatus changes concurrency synchronization memory access code corresponding to the variable v included in the program shown in FIG. 4a into SC-atomic memory access code, due to semantics of the SC-atomic memory access code in the weak memory ordering hardware architecture, an operation in a critical region may still be reordered according to a direction of a dashed line with an arrow and therefore moved out of the critical region. In this case, assert(a==b) may still not be satisfied (for example, in the thread 2, one of a=x and b=y is reordered to be after assert).

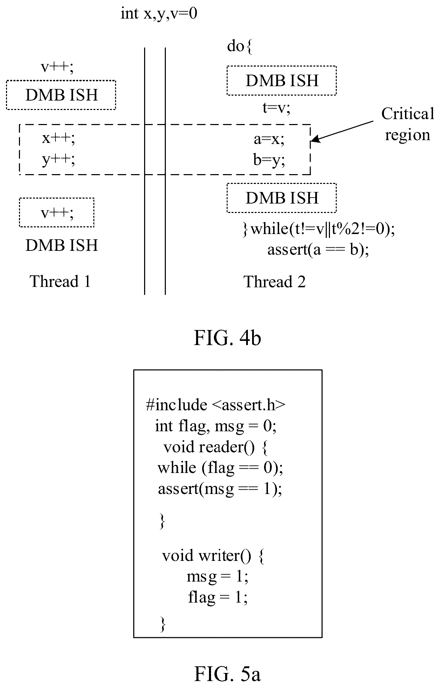

For the foregoing problem, in an example, as shown in FIG. 4b, the code processing apparatus may insert a memory barrier instruction (barrier) (for example, DMB ISH, where DMB ISH is a memory barrier instruction in the ARM architecture) before a read operation instruction (for example, while(t!=v||t%2!=0)) of the variable v and after a write operation instruction (for example, v++) of the variable v, where the read operation instruction and the write operation instruction are included in the SC-atomic memory access code corresponding to the variable v. This can effectively prevent reordering and implement an order-preserving operation, to ensure that assert(a==b) is satisfied, and further ensure execution correctness of the code during execution.

Manner 2: The code processing apparatus may query, from the first code, memory access code that has a same-name relationship or an alias relationship with a third variable. Then the code processing apparatus may convert the memory access code that has a same-name relationship or an alias relationship with the third variable into second SC-atomic memory access code.

Optionally, in a possible implementation, the code processing apparatus may directly query, from the first code, memory access code corresponding to the third variable. Then the code processing apparatus may convert the memory access code corresponding to the third variable into the second SC-atomic memory access code.

In another possible implementation, the code processing apparatus may query, from the first code through similarity matching or in another matching manner, a variable with a same name as the third variable; and query, from the first code, memory access code corresponding to the variable with the same name. Then the code processing apparatus may convert the memory access code corresponding to the variable with the same name into the second SC-atomic memory access code.

In still another possible implementation, the code processing apparatus may query, from the first code by using a pointer alias analysis method (for example, a global pointer alias analysis method), memory access code that has an alias relationship with the third variable. Then the code processing apparatus may convert the memory access code that has an alias relationship with the third variable into the second SC-atomic memory access code.

It should be noted that, in the technical solution provided in this embodiment of this application, the first code may be further scanned, and a warning or a scan report is generated to notify a programmer of a related code bug. Optionally, the technical solution provided in this embodiment of this application may alternatively be configured in an integrated development environment (Integrated Development Environment, IDE), to indicate, in real time, a programmer to annotate a concurrency synchronization variable and insert a memory barrier instruction (barrier). In addition, for a binary file, a programmer may generate a control flow graph by using a tool, and then analyze the control flow graph by using the technical solution provided in this embodiment of this application to perform concurrency synchronization variable recognition on a read/write operation included in the binary file, and convert concurrency synchronization memory access code corresponding to a recognized concurrency synchronization variable into corresponding SC-atomic memory access code.

It can be learned from step 301 to step 303 that, after recognizing the at least one concurrency synchronization variable included in the first code, the code processing apparatus may query, from the first code, the concurrency synchronization memory access code corresponding to each of the at least one concurrency synchronization variable, and may convert the concurrency synchronization memory access code corresponding to each of the at least one concurrency synchronization variable into the corresponding SC-atomic memory access code. In this way, because the SC-atomic conversion operation performed in this solution has an order-preserving characteristic, consistency between an execution order and a writing order of concurrency synchronization-related code can be ensured in this solution, to ensure sequential consistency and ensure functional correctness of the code.

In addition, based on the foregoing content, comparison between effect of the code processing solution provided in this embodiment of this application and a conventional solution is described below by using Table 1 to Table 3.

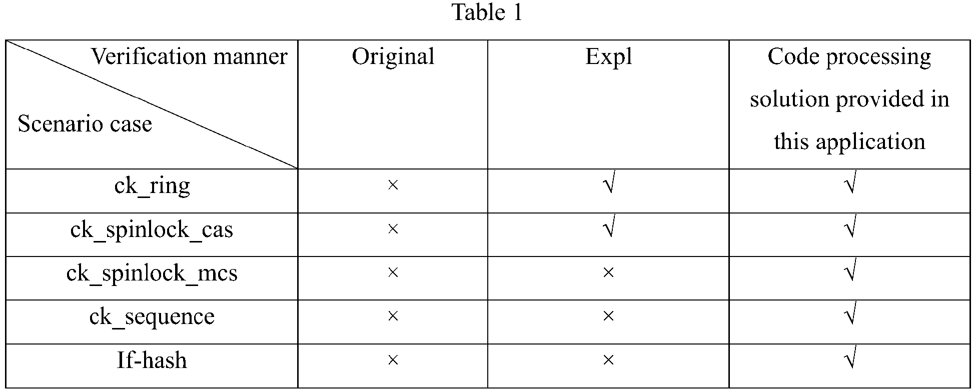

× in Table 1 indicates that formal verification on correctness fails, and √ in Table 1 indicates that formal verification on correctness succeeds. The scenario case in Table 1 indicates a plurality of cases (case) included in a concurrency kit (concurrency kit). Original in Table 1 indicates that formal verification is directly performed on a program of each case in the scenario case without any modification. Expl in Table 1 indicates that, it is assumed that a keyword volatile included in the program of each case in the scenario case is fully annotated, and then formal verification is performed after concurrency synchronization memory access code corresponding to a variable annotated with the keyword volatile is converted into SC-atomic memory access code. In the code processing solution provided in this application, recognition on an implicit concurrency synchronization variable spin control and an implicit concurrency synchronization variable optimistic control is added based on Expl, and formal verification is performed after the implicit concurrency synchronization variables are recognized and concurrency synchronization memory access code corresponding to the implicit concurrency synchronization variables is converted into SC-atomic memory access code.

It should be noted that, because the concurrency kit is a general-purpose concurrency kit and covers most concurrency synchronization scenarios, coverage and correctness of the code processing solution provided in this embodiment of this application are effectively ensured.

**Table 2**

| Open-source project | Number of code lines | Number of variables that may be referred to as spin controls | Number of variables that may be referred to as optimistic controls | Code compilation time taken before the code processing solution provided in this application is used | Code compilation time taken after the code processing solution provided in this application is used | Number of inserted explicit barriers | Numbe r of inserted implicit barriers | Number of implicit barriers that need to be inserted for a plurality of load/store operations included in the open-source project |
|---|---|---|---|---|---|---|---|---|
| MariaDB | 3,124,26 5 | 12,880 | 1,970 | 20 minutes and 51s | 40 minutes and 21s | 12,361 | 66,347 | 366,774 |
| PostgreSQL | 880,400 | 1,750 | 544 | 4 minutes and 59s | 10 minutes and 40s | 3,455 | 42,744 | 243,790 |
| LevelDB | 82,725 | 458 | 263 | 1 minute and 17s | 3 minutes and 21s | 2,798 | 11,128 | 65,042 |
| Memcached | 28,957 | 75 | 20 | 17s | 30s | 231 | 1,564 | 11,515 |
| SQLite | 263,125 | 1,057 | 254 | 4 minutes and 1s | 11 minutes and 54s | 4,016 | 44,860 | 122,611 |

The open-source project in Table 2 is a currently well-known open-source project in the industry. The number of code lines in Table 2 is a quantity of code lines of each open-source project. The 3^{rd} column in Table 2 indicates a quantity of recognized variables that may be referred to as spin controls in each open-source project. The 4^{th} column in Table 2 indicates a quantity of recognized variables that may be referred to as optimistic controls in each open-source project. The 7^{th} column in Table 2 indicates a quantity of explicit barriers inserted in each open-source project by using the code processing solution provided in this application. The 8^{th} column in Table 2 indicates a quantity of implicit barriers inserted in each open-source project by using the code processing solution provided in this application. The 9^{th} column in Table 2 indicates a quantity of implicit barriers that need to be inserted for a plurality of load/store operations included in each open-source project. It can be learned from Table 3 that, for each open-source project, code compilation time is not significantly increased after the code processing solution provided in this application is used in the open-source project. In addition, after the code processing solution provided in this application is used in the open-source project, both a quantity of inserted explicit barriers or a quantity of inserted implicit barriers is controllable. The implicit barrier indicates a memory barrier instruction that provides both an order-preserving function and a memory access function. For example, a memory access instruction ldar/stlr in the ARM architecture includes an order-preserving function of a memory barrier, and an implicit barrier is correspondingly inserted for the memory access instruction. The explicit barrier indicates that a separate memory barrier instruction, for example, DMB ISH in the ARM architecture, provides only an order-preserving function but does not provide a memory access function.

**Table 3**

| Open-source project and scenario case | Execution time taken after all memory access code is converted into SC-atomic | Execution time taken after the code processing solution provided in this application is used |
|---|---|---|
| MariaDB | 1.27 | 1.01 |
| PostgreSQL | 1.35 | 1.04 |
| LevelDB | 1.66 | 1.01 |
| Memcached | 1.01 | 1.00 |
| SQLite | 2.49 | 1.03 |
| ck_ring | 4.43 | 0.85 |
| ck_spinlock_cas | 5.35 | 0.91 |
| ck_spinlock_mcs | 3.75 | 0.63 |
| ck_sequence | 5.29 | 0.64 |
| If-hash | 3.05 | 1.01 |

The 1^{st} column in Table 3 indicates a plurality of open-source projects and a plurality of cases included in a concurrency kit. The 2^{nd} column in Table 3 indicates execution time taken after all memory access code included in code corresponding to each item included in the 1^{st} column is converted into corresponding SC-atomic memory access code. The 3^{rd} column in Table 3 indicates code execution time taken after the code processing solution provided in this application is used in each item included in the 1^{st} column. In addition, code execution time in the ARM architecture is 1. It can be learned from Table 3 that, although performance overheads of items included in the 1^{st} column increase by 1.8% on average after the code processing solution provided in this application is used, performance, achieved after the code processing solution provided in this application is used, of some cases included in the 1^{st} column is still better than code execution performance in the ARM architecture.

For example, based on the technical solution provided in the foregoing step 301 to step 303, an implementation process of processing, by the code processing apparatus, source code to improve functional correctness of code is described below by using source code, shown in FIG. 5a, that is executed on a source hardware architecture (for example, a weak memory ordering hardware architecture ARM) as an example.

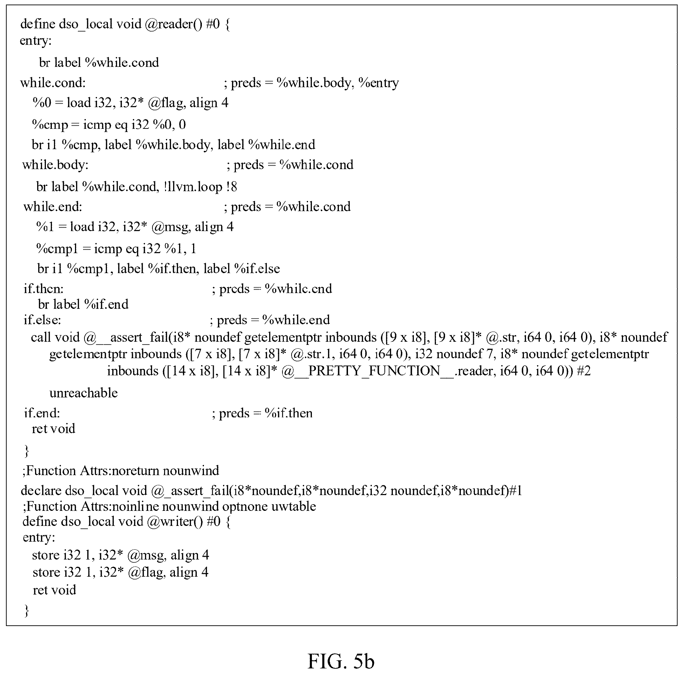

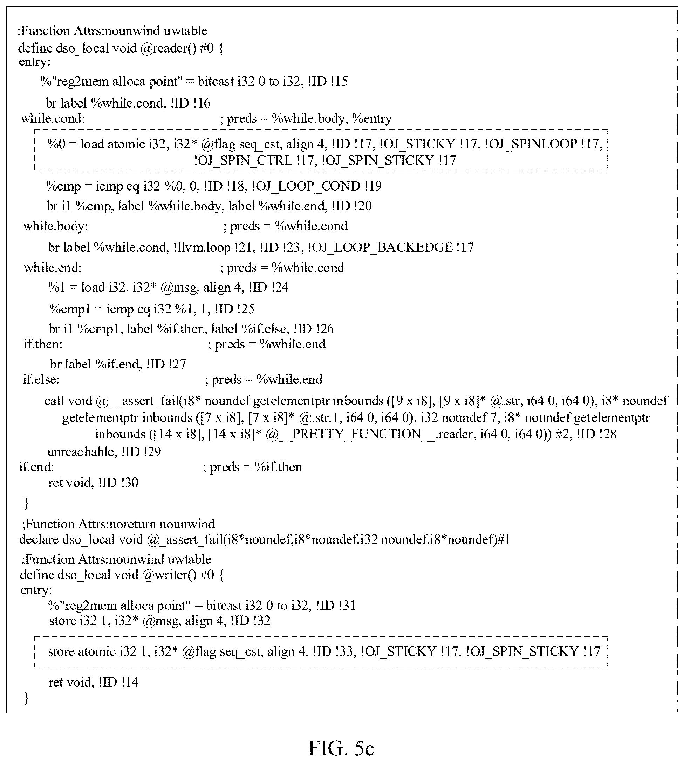

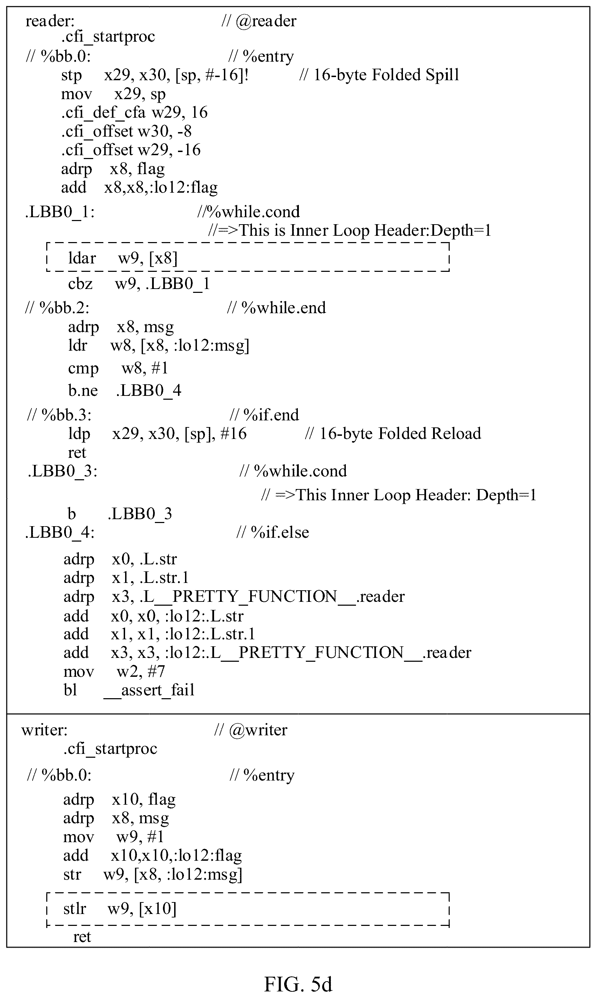

Optionally, an intermediate language compilation module included in a compiler may compile the source code shown in FIG. 5a into intermediate representation shown in FIG. 5b. Then the code processing apparatus may obtain the intermediate representation shown in FIG. 5b, and perform concurrency synchronization variable recognition on the intermediate representation shown in FIG. 5b to obtain a concurrency synchronization variable, for example, obtain a concurrency synchronization variable that may be referred to as a spin control. After recognizing the concurrency synchronization variable that may be referred to as a spin control, the code processing apparatus may query, from the intermediate representation shown in FIG. 5b, concurrency synchronization memory access code that has an alias relationship with the concurrency synchronization variable that may be referred to as a spin control, and may convert the concurrency synchronization memory access code that has an alias relationship with the concurrency synchronization variable that may be referred to as a spin control into corresponding SC-atomic memory access code, for example, SC-atomic memory access code in a dashed-line box shown in FIG. 5c. After obtaining the SC-atomic memory access code, the code processing apparatus may insert a corresponding memory barrier instruction (barrier) before a read operation instruction of the concurrency synchronization variable that may be referred to as a spin control and after a write operation instruction of the concurrency synchronization variable that may be referred to as a spin control, where the read operation instruction and the write operation instruction are included in the SC-atomic memory access code. Then a first program conversion module included in the compiler may convert SC-atomic memory access code, into which the barrier has been inserted, into SC-atomic memory access code applicable to the target hardware architecture, for example, SC-atomic memory access code in a dashed-line box shown in FIG. 5d. In addition, the first program conversion module included in the compiler may convert the SC-atomic memory access code applicable to the target hardware architecture into corresponding binary code. Optionally, the first program conversion module included in the compiler may alternatively convert code, other than the SC-atomic memory access code, included in the intermediate representation shown in FIG. 5b into corresponding binary code.

It should be noted that, in the descriptions of this application, "at least one" means one or more, and "a plurality of' means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" usually indicates an "or" relationship between the associated objects. "At least one of the following items (pieces)" or a similar expression thereof indicates any combination of the items, including one of the items (pieces) or any combination of a plurality of the items (pieces). For example, "at least one of A, B, and C" includes A, B, C, AB, AC, BC, or ABC. In addition, unless otherwise specified, ordinal numbers such as "first", "second", and "third" in embodiments of this application are intended to distinguish between a plurality of objects, but not to limit an order, a time sequence, priorities, or importance of the plurality of objects. In addition, the terms "include", "comprise", "have", and their variants appearing in this application all mean "including but not limited to", unless otherwise specially emphasized in another manner.

In addition, it should be noted that each step in the foregoing embodiments may be performed by a corresponding device, or may be performed by a component, for example, a chip, a processor, or a chip system, in the device. This is not limited in embodiments of this application. In the foregoing embodiments, an example in which each step is performed by a corresponding device is used for description.

It should be noted that, in the foregoing embodiments, some of the steps may be selected for implementation, or a sequence of the steps in the figure may be adjusted for implementation. This is not limited in this application. It should be understood that performing some of the steps in the figure, adjusting a sequence of the steps, or combining the two manners for specific implementation shall fall within the protection scope of this application.

It can be understood that, to implement the functions in the foregoing embodiments, devices in the foregoing embodiments include corresponding hardware structures and/or software modules for performing the functions. A person skilled in the art should be easily aware that, in this application, the units and the method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

It should be noted that the "step" in embodiments of this application is merely an example, is a representation method for better understanding embodiments, and does not constitute a substantive limitation on execution of the solutions of this application. For example, the "step" may also be understood as a "feature". In addition, the step does not constitute any limitation on an execution order of the solutions of this application, and a new technical solution formed through an operation, for example, step sequence change, step combination, or step splitting, performed on this basis without affecting implementation of the overall solutions also falls within the scope disclosed in this application.

Based on a same concept, an embodiment of this application further provides a possible code processing apparatus. The code processing apparatus is applicable to the system architecture shown in FIG. 1. The code processing apparatus is configured to implement the code processing method provided in the foregoing embodiments, or a module (for example, a chip) of the code processing apparatus is configured to implement the code processing method provided in the foregoing embodiments. Therefore, the beneficial effect of the foregoing embodiments can also be achieved. In this embodiment of this application, the code processing apparatus may be the code recognition and conversion module included in the compiler in the application layer 110 shown in FIG. 1; or may be the compiler in the application layer 110 shown in FIG. 1, where the compiler is equipped with a code recognition and conversion module or has a corresponding function of a code recognition and conversion module.

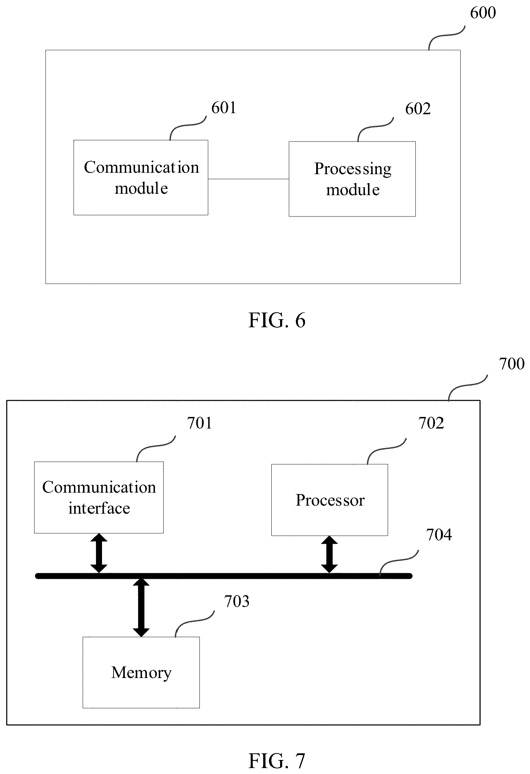

As shown in FIG. 6, the code processing apparatus 600 includes a communication module 601 and a processing module 602. The communication module 601 is configured to obtain first code corresponding to a source hardware architecture. The processing module 602 is configured to perform concurrency synchronization variable recognition on the first code to obtain at least one concurrency synchronization variable. The concurrency synchronization variable indicates a global variable for transferring a message between a plurality of threads or a variable simultaneously accessible to a plurality of threads. The processing module 602 is further configured to query, from the first code, concurrency synchronization memory access code corresponding to each of the at least one concurrency synchronization variable. The processing module is further configured to convert the concurrency synchronization memory access code corresponding to each of the at least one concurrency synchronization variable into corresponding SC-atomic memory access code. The SC-atomic memory access code corresponding to each of the at least one concurrency synchronization variable is used to generate target code applicable to a target hardware architecture.

For more detailed descriptions of the communication module 601 and the processing module 602, refer to related descriptions of the code processing apparatus in the foregoing method embodiments. Details are not described herein again.

It should be understood that the communication module 601 in this embodiment of this application may be implemented by using a communication interface or a communication interface-related circuit component, and the processing module 602 may be implemented by using a processor or a processor-related circuit component.

It should be noted that division into the modules in embodiments of this application is an example, and is merely logical function division. During actual implementation, another division manner may be used. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or the like) or a processor (processor) to perform all or some of the steps of the methods in embodiments of this application. The storage medium includes any medium that can store program code, for example, a USB flash drive, a removable hard disk drive, a read-only memory (read-only memory, ROM), a random access memory (random access memory, RAM), a magnetic disk, or a compact disc.

Based on a same concept, an embodiment of this application further provides a possible code processing apparatus. The code processing apparatus is applicable to the system architecture shown in FIG. 1. The code processing apparatus is configured to implement the technical solutions related to the code processing apparatus in the foregoing embodiments, and therefore can also achieve the beneficial effect of the code processing apparatus in the foregoing method embodiments. As shown in FIG. 7, the code processing apparatus 700 includes a communication interface 701 and a processor 702. Optionally, the code processing apparatus 700 further includes a memory 703. The communication interface 701, the processor 702, and the memory 703 are connected to each other. When the code processing apparatus 700 is configured to implement the technical solutions related to the code processing apparatus in the foregoing embodiments, the communication interface 701 may be configured to implement a function of the communication module 601, and the processor 702 is configured to implement a function of the processing module 602.

Optionally, the communication interface 701, the processor 702, and the memory 703 are connected to each other through a bus 704. The bus 704 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used in FIG. 7 for representation, but this does not mean that there is only one bus or only one type of bus.

The communication interface 701 is configured to receive and send data. For example, when the code processing apparatus is the code recognition and conversion module included in the compiler in the application layer 110 shown in FIG. 1, the communication interface 701 communicates with the application framework layer 120 shown in FIG. 1.

For a function of the processor 702, refer to descriptions of a corresponding function related to the code processing apparatus in the foregoing embodiments. Details are not described herein again. The processor 702 may be a central processing unit (central processing unit, CPU), a network processor (network processor, NP), a combination of a CPU and an NP, or the like. The processor 702 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof. When the processor 702 implements the foregoing functions, the functions may be implemented by hardware, or certainly, may be implemented by hardware executing corresponding software.

The memory 703 is configured to store program instructions and the like. Specifically, the program instructions may include program code, and the program code includes computer operation instructions. The memory 703 may include a random access memory (random access memory, RAM), or may further include a non-volatile memory (non-volatile memory), for example, at least one magnetic disk memory. The processor 702 executes the program instructions stored in the memory 703 to implement the foregoing functions, to implement the method steps that need to be performed by the code processing apparatus in the foregoing embodiments.

Based on a same concept, an embodiment of this application further provides a computer program product. The computer program product includes a computer program or instructions. When the computer program or instructions are run on a computer, the computer is enabled to perform the method provided in the foregoing embodiments.

Based on a same concept, an embodiment of this application further provides a computer-readable storage medium. The computer-readable storage medium stores a computer program or instructions. When the computer program or instructions are executed by a computer, the computer is enabled to perform the method provided in the foregoing embodiments.

The storage medium may be any usable medium that can be accessed by a computer. For example, the computer-readable medium may include but is not limited to a RAM, a ROM, an EEPROM, a CD-ROM or another compact disc storage, a magnetic disk storage medium or another magnetic storage device, or any other medium that can carry or store expected program code in a form of an instruction or a data structure and that can be accessed by a computer.

Based on a same concept, an embodiment of this application further provides a chip. The chip is coupled to a memory, and the chip is configured to read a computer program stored in the memory, to implement the method provided in the foregoing embodiments.

Based on a same concept, an embodiment of this application further provides a chip system. The chip system includes a processor, configured to support a computer apparatus in implementing a function related to the code processing apparatus in the foregoing embodiments. In a possible design, the chip system further includes a memory, and the memory is configured to store a program and data that are necessary for the computer apparatus. The chip system may include a chip, or may include a chip and another discrete component.

All or some of the methods provided in embodiments of this application may be implemented by software, hardware, firmware, or any combination thereof. When the methods are implemented by software, all or some of the methods may be implemented in a form of a computer program product. The computer program product includes one or more computer instructions. When the computer instructions are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

The steps of the methods described in embodiments of this application may be directly embedded into hardware, a software unit executed by a processor, or a combination thereof. The software unit may be stored in a RAM, a ROM, an EEPROM, a register, a hard disk drive, a removable magnetic disk, a CD-ROM, or a storage medium of any other form in the art. For example, the storage medium may be connected to a processor so that the processor can read information from the storage medium and write information to the storage medium. Optionally, the storage medium may alternatively be integrated into a processor. The processor and the storage medium may be disposed in an ASIC.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Clearly, a person skilled in the art can make various modifications and variations to this application without departing from the spirit and scope of this application. This application is intended to cover these modifications and variations of this application provided that they fall within the scope of the claims of this application and their equivalent technologies.

## Claims

1. A code processing method, comprising:
obtaining first code corresponding to a source hardware architecture;
performing concurrency synchronization variable recognition on the first code to obtain at least one concurrency synchronization variable, wherein the concurrency synchronization variable is a global variable for transferring a message between a plurality of threads or a variable simultaneously accessible to a plurality of threads; and
querying, from the first code, concurrency synchronization memory access code corresponding to each of the at least one concurrency synchronization variable, and converting the concurrency synchronization memory access code corresponding to each of the at least one concurrency synchronization variable into corresponding sequential consistency SC-atomic atomic memory access code, wherein
the SC-atomic memory access code corresponding to each of the at least one concurrency synchronization variable is used to generate target code applicable to a target hardware architecture.

2. The method according to claim 1, wherein performing concurrency synchronization variable recognition on the first code to obtain the at least one concurrency synchronization variable comprises:
when a first variable comprised in the first code is annotated with a keyword volatile or a keyword atomic, determining that the first variable is an explicit concurrency synchronization variable; or
when a loop exit condition of a first loop statement in the first code comprises a second variable with a non-local dependency attribute and the second variable does not affect the loop exit condition of the first loop statement, determining that the second variable is an implicit concurrency synchronization variable.

3. The method according to claim 2, wherein the method further comprises:
when the first loop statement in the first code comprises a third variable with a non-local dependency attribute other than the second variable and a related value of the third variable is used outside a loop body of the first loop statement, inserting a memory barrier instruction into first SC-atomic memory access code corresponding to the second variable.

4. The method according to claim 3, wherein inserting the memory barrier instruction into the first SC-atomic memory access code corresponding to the second variable comprises:
inserting the memory barrier instruction before a read operation instruction, comprised in the first SC-atomic memory access code, of the second variable, and/or inserting the memory barrier instruction after a write operation instruction, comprised in the first SC-atomic memory access code, of the second variable.

5. The method according to claim 2, wherein the method further comprises:
querying, from the first code, memory access code that has a same-name relationship or an alias relationship with the third variable; and
converting the memory access code that has a same-name relationship or an alias relationship with the third variable into second SC-atomic memory access code.

6. The method according to any one of claims 2 to 5, wherein querying, from the first code, the concurrency synchronization memory access code corresponding to each of the at least one concurrency synchronization variable, and converting the concurrency synchronization memory access code corresponding to each of the at least one concurrency synchronization variable into the corresponding SC-atomic memory access code comprises:
when the at least one concurrency synchronization variable comprises the explicit concurrency synchronization variable, querying, from the first code by using a pointer alias analysis method, first concurrency synchronization memory access code that has an alias relationship with the explicit concurrency synchronization variable, and converting the first concurrency synchronization memory access code into third SC-atomic memory access code; or
when the at least one concurrency synchronization variable comprises the implicit concurrency synchronization variable, querying, from the first code by using a pointer alias analysis method, second concurrency synchronization memory access code that has an alias relationship with the implicit concurrency synchronization variable, and converting the second concurrency synchronization memory access code into fourth SC-atomic memory access code.

7. The method according to any one of claims 1 to 6, wherein the first code is one of the following content: C/C++ source code, assembly code, or intermediate code, wherein the intermediate representation is obtained by compiling the C/C++ source code.

8. A code processing apparatus, comprising:
a communication module, configured to obtain first code corresponding to a source hardware architecture; and
a processing module, configured to: perform concurrency synchronization variable recognition on the first code to obtain at least one concurrency synchronization variable, wherein the concurrency synchronization variable is a global variable for transferring a message between a plurality of threads or a variable simultaneously accessible to a plurality of threads; and query, from the first code, concurrency synchronization memory access code corresponding to each of the at least one concurrency synchronization variable, and convert the concurrency synchronization memory access code corresponding to each of the at least one concurrency synchronization variable into corresponding sequential consistency SC-atomic atomic memory access code, wherein the SC-atomic memory access code corresponding to each of the at least one concurrency synchronization variable is used to generate target code applicable to a target hardware architecture.

9. The apparatus according to claim 8, wherein when performing concurrency synchronization variable recognition on the first code to obtain the at least one concurrency synchronization variable, the processing module is specifically configured to:
when a first variable comprised in the first code is annotated with a keyword volatile or a keyword atomic, determine that the first variable is an explicit concurrency synchronization variable; or
when a loop exit condition of a first loop statement in the first code comprises a second variable with a non-local dependency attribute and the second variable does not affect the loop exit condition of the first loop statement, determine that the second variable is an implicit concurrency synchronization variable.

10. The apparatus according to claim 9, wherein the processing module is further configured to:
when the first loop statement in the first code comprises a third variable with a non-local dependency attribute other than the second variable and a related value of the third variable is used outside a loop body of the first loop statement, insert a memory barrier instruction into first SC-atomic memory access code corresponding to the second variable.

11. The apparatus according to claim 10, wherein when inserting the memory barrier instruction into the first SC-atomic memory access code corresponding to the second variable, the processing module is specifically configured to:
insert the memory barrier instruction before a read operation instruction, comprised in the first SC-atomic memory access code, of the second variable, and/or insert the memory barrier instruction after a write operation instruction, comprised in the first SC-atomic memory access code, of the second variable.

12. The apparatus according to claim 9, wherein the processing module is further configured to:
query, from the first code, memory access code that has a same-name relationship or an alias relationship with the third variable; and
convert the memory access code that has a same-name relationship or an alias relationship with the third variable into second SC-atomic memory access code.

13. The apparatus according to any one of claims 9 to 12, wherein when querying, from the first code, the concurrency synchronization memory access code corresponding to each of the at least one concurrency synchronization variable, and converting the concurrency synchronization memory access code corresponding to each of the at least one concurrency synchronization variable into the corresponding SC-atomic memory access code, the processing module is specifically configured to:
when the at least one concurrency synchronization variable comprises the explicit concurrency synchronization variable, query, from the first code by using a pointer alias analysis method, first concurrency synchronization memory access code that has an alias relationship with the explicit concurrency synchronization variable, and convert the first concurrency synchronization memory access code into third SC-atomic memory access code; or
when the at least one concurrency synchronization variable comprises the implicit concurrency synchronization variable, query, from the first code by using a pointer alias analysis method, second concurrency synchronization memory access code that has an alias relationship with the implicit concurrency synchronization variable, and convert the second concurrency synchronization memory access code into fourth SC-atomic memory access code.

14. The apparatus according to any one of claims 8 to 13, wherein the first code is one of the following content: C/C++ source code, assembly code, or intermediate representation, wherein the intermediate representation is obtained by compiling the C/C++ source code.

15. A code processing apparatus, comprising:
a communication interface, configured to receive and send data;
a memory, configured to store computer program instructions and data; and
a processor, configured to invoke the computer program instructions and the data in the memory, to enable the code processing apparatus to perform the method according to any one of claims 1 to 7.

16. A computer-readable storage medium, wherein the computer-readable storage medium stores a computer program or instructions, and when the computer program or instructions are executed by a computer, the computer is enabled to perform the method according to any one of claims 1 to 7.

17. A computer program product, wherein the computer program product comprises a computer program or instructions, and when the computer program or instructions are run on a computer, the computer is enabled to perform the method according to any one of claims 1 to 7.

18. A chip, wherein the chip is coupled to a memory, and the chip reads a computer program stored in the memory to perform the method according to any one of claims 1 to 7.
